# EUROPEAN PATENT APPLICATION

(11) **EP 1 110 667 A2**
(43) Date of publication of application: **27.06.2001**
(21) Application number: 00114326.2
(22) Date of filing: 04.07.2000
(51) Int. Cl.: B23Q 16/00, B23Q 7/14, B25B 11/00

(54) **A suction table apparatus for a numerical control machine**

(30) Priority: 20.12.1999 JP 36188799
(71) Applicant: HEIAN CORPORATION, Hamamatsu-shi, Shizuoka-ken (JP)
(72) Inventor: Suzuki, Yukitomo, c/o Heian Corporation, Hamamatsu-shi, Shizuoka-ken (JP)
(74) Representative: Kirschner, Klaus Dieter, Dipl.-Phys.

(57) **Abstract**

A suction table apparatus for a numerical control machine is characterized by a plurality of long support members (20) mounted to be moved to a width direction of a table (17), rule stopper frames (23) mounted to be moved along the long support members (20) respectively at one end thereof, rule stoppers (25) respectively attached to the rule stopper frames (23) respectively, pad frames (27) mounted to be moved along the long support members (20) in spaces left by the rule stopper frames (23) respectively, and suction pads (29) respectively attached to each of the pad frames (27). The rule stopper frames (23) and pad frames (27) can be moved on the long support members (20) independently from each other, whereby a rectangular process board or a process board having a curved edge can be positioned and sucked on by suction pads (29).

## Description

The present invention relates to a suction table apparatus for a numerical control machine.

In a prior art, there is provided a numerical control routor in which a head structure having plural heads is moved by a servomotor along rails attached to a front side of a cross beam on upper portion of a base member, plural movement frames are respectively moved and positioned by a servomotor in parallel on a table frame, plural movement pad frames are mounted to move on the movement frame respectively by a servomotor, suction pads are respectively mounted on the movement pad frames to move up and down by cylinders, whereby the movement frames and the movement pad frames are positioned in predetermined spaces respectively.

However, in the numerical control machine of the prior art, although a rectangular process board may be positioned on the suction pads on the table frame to be processed, a process board having a curved edge can not be positioned on the suction pad on the table frame.

It is, therefore, the object of the present invention to provide a suction table apparatus for a numerical control machine in which a rectangular process board and a process board having a curved edge can be positioned and sucked on the suction pad.

In order to accomplish the above and other object, the present invention characterized by a plurality of long support members mounted to be moved to a width direction of a table, rule stopper frames mounted to be moved along the long support members respectively at one end thereof, rule stoppers respectively attached to the rule stopper frames respectively, first pad frames mounted to be moved along the long support members in spaces left by the rule stopper frames respectively, and suction pads respectively attached to each of the pad frames.

A preferred embodiment of the invention is characterized in that the rule stopper frames and the first pad frames are moved and positioned according to the shape of a process board by the rule stopper moving servomotor and the pad moving servomotor.

A further preferred embodiment of the invention is characterized in that the long support members and the table are mounted on rails on the base and the table respectively.

A further preferred embodiment of the invention is characterized in that second pad frames are mounted on the long support members, said second pad frames having suction pads respectively attached thereto.

A further preferred embodiment of the invention is characterized in that additional pad frames are movable independently from the pad frames and the rule stoppers.

Further preferred embodiments of the invention and the features thereof are given in the appended claims and sub-claims.

Preferred embodiments of the invention will now be described in detail in conjunction with the accompanying drawings in which:

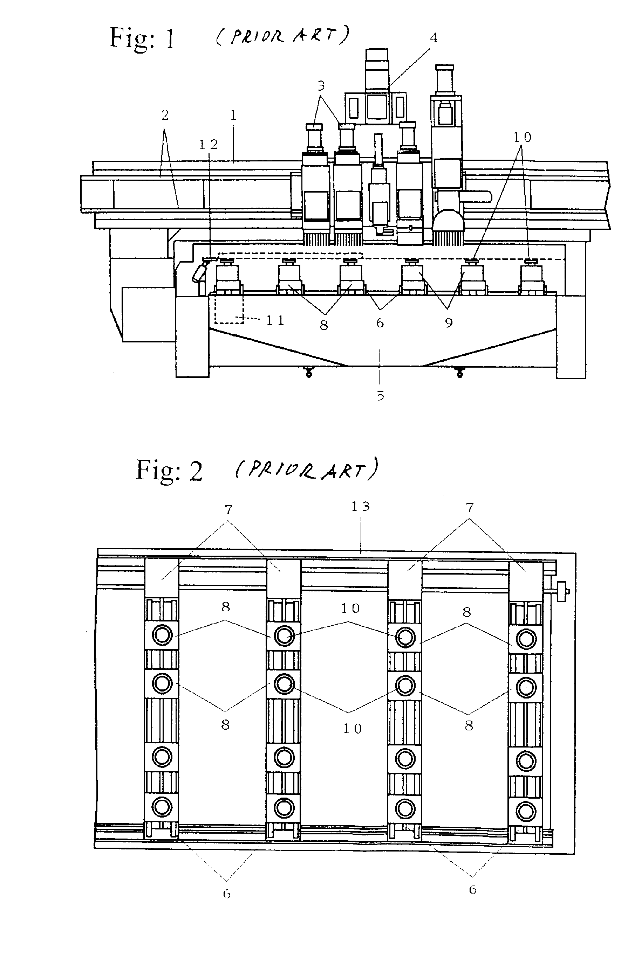

- Fig. 1: shows a front view of a numerical control machine provided by the applicant;
- Fig. 2: shows a plane view of a suction table of the numerical control machine in Fig. 1;
- Fig. 3: shows a plane view of the suction table on which a large process board is sucked in Fig. 1;
- Fig. 4: shows a plane view of the suction table on which a small process board is sucked in Fig. 1;
- Fig. 5: shows a plane view of a suction table apparatus for a numerical control machine in the embodiment of the present invention;
- Fig. 6: shows a side view of a suction table apparatus for a numerical control machine in Fig. 5;
- Fig. 7: shows a rear view of a suction table apparatus in Fig. 5;
- Fig. 8: shows a sectional view of a suction table apparatus in Fig. 5;
- Fig. 9: shows a plane view on which a process board is mounted on a suction table apparatus in Fig. 5; and
- Fig. 10: shows a plane view of a suction table apparatus for a numerical control machine in the other embodiment of the present invention.

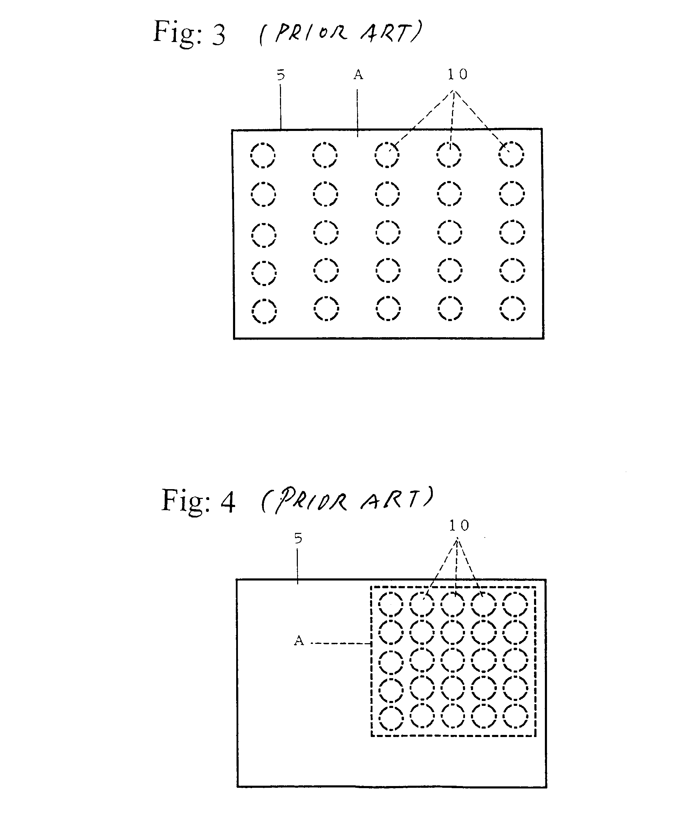

The applicant provided a numerical control machine (see Japanese Patent Opening No. 6-43044) shown in Figs, 1 and 2 in which a head structure 4 having plural heads 3 is moved by servomotor along rails 2 attached to front of a base frame 1. A table 5 is moved by servomotor to cross to the moving direction of the head structure 4. A plurality of moving racks 6 are mounted in parallel to be moved on the table 5. A plurality of moving pad rack 8 are mounted to be moved on the moving racks respectively. A plurality of suction pads 10 are attached to plural up and down cylinders mounted on the moving pad racks 8 respectively. The moving racks 8 are respectively positioned by servomotors 11. In this machine, the spaces between the moving racks 6 and the moving pad racks 8 are regulated to predetermined values, two examples of the positioning of the suction pads being shown in Figs. 3 and 4. Also rule stoppers 12 and 13 are provided with the end of the table 5. In this numerical control machine of the prior art, though a rectangular process board may be positioned on the suction pads on the table 5 to be processed, it is not possible to position a process board having a curved edge on the suction pad on the table frame with the required accuracy.

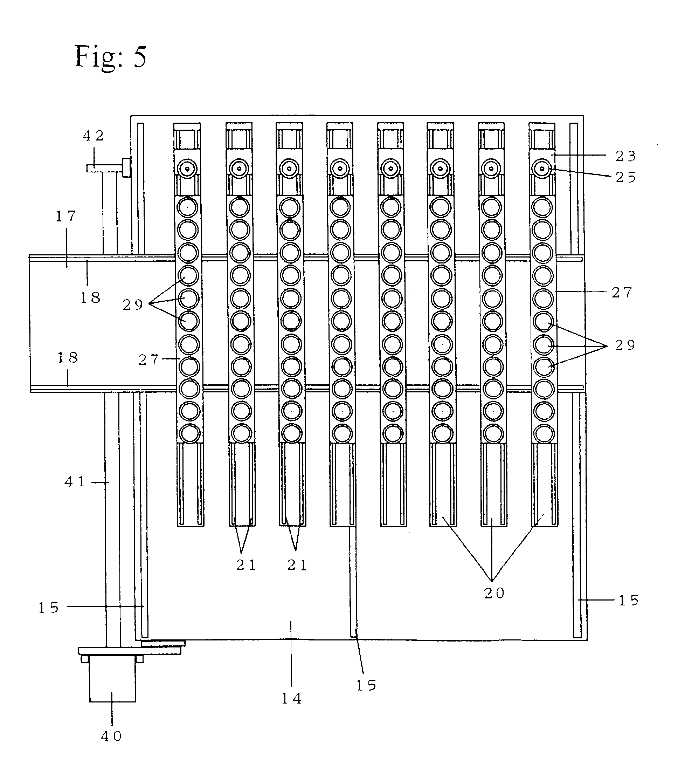

Referring to Figs. 5 to 8, rails 15 are mounted on a base 14. Bearings 16 engaged with the rails 15 are attached to the lower part of a table 17. Also, rails 18 are mounted on top of the table 17. Bearings 19 engaged with the rails 18 are attached to the lower parts of plural long support members 20 respectively. Rails 21 are respectively mounted on the long support members 20. Bearings 22 engaged with the rails 21 are respectively attached to rule stopper frames 23. Up and down cylinders 24 with attached rule stoppers 25 are mounted on the rule stopper frames 23.

Bearings 26 mounted under pad frames 27 are engaged with rails 21 on the long support member 20 in some space the rule stopper members 23 respectively. A plurality of up and down cylinders 28 are respectively mounted on the pad frames 27, and suction pads 29 are respectively attached to the moving shafts of the up down cylinders 28.

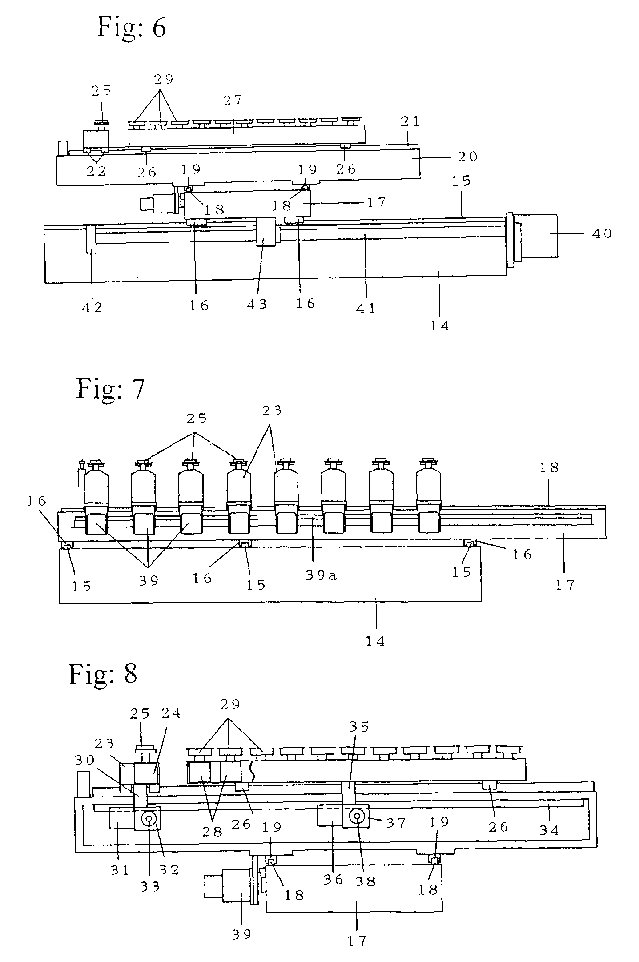

Connecting members 30 are projected under the rule stopper frames 23. Rule stopper moving servomotors 31 and gear boxes 32 are respectively mounted to the connecting members 30 as shown in Fig. 8, and pinions 33 fixed shafts of the gear boxes 32 are engaged with racks 34 respectively.

Connecting members 35 are projected under the pad frames 27, pad moving servomotors 36 and gear boxes 37 are respectively mounted the connecting members 35 as shown in Fig, 8, and pinions 38 fixed shafts of the gear boxes 37 are engaged with racks 34 respectively.

Long support member moving servomotor 39 are respectively mounted on the ends of long support members 20, and pinions (not shown) respectively fixed the long support member moving servomotor 39 are engaged with a rack mounted on the table 17, whereby the long support members 20 are moved by the long support member moving servomotor 39.

A table moving servomotor 40 is mounted the end of the base 14, an end of screw shaft 41 connected to the rotary shaft of the table moving servomotor 40, the other end of the screw shaft 41 is supported to move by a support member 42, and connecting member 43 projecting under the table 17 is engaged with the screw shaft 41.

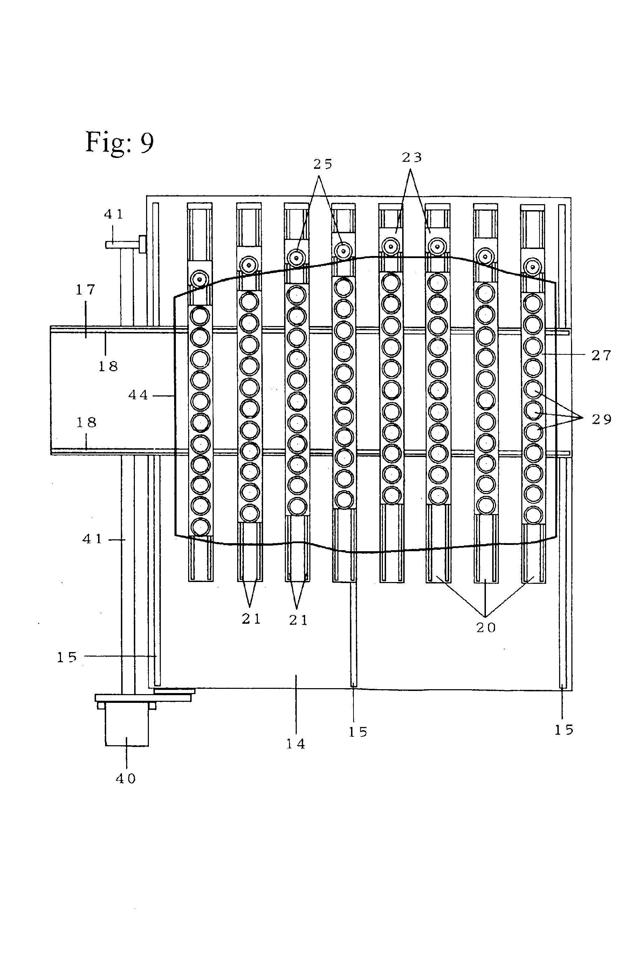

In the suction table apparatus in the present embodiment, as shown in Fig. 9, if one edge of a process board 44 is curved, the long support members 20 are moved and positioned according to the process board 44 by the support moving servomotor 39, the rule stopper frames 23 are moved and positioned according to the process board 44 by the rule stopper moving servomotor 32 and the pad frames 27 are moved and positioned according to the process board 44 by the pad moving servomotor 36.

As the first pad frames 27 and the second pad frames 46 can be moved and positioned independently from each other, a process board having predetermined formation can held by suction force in an advantageous way in this embodiment.

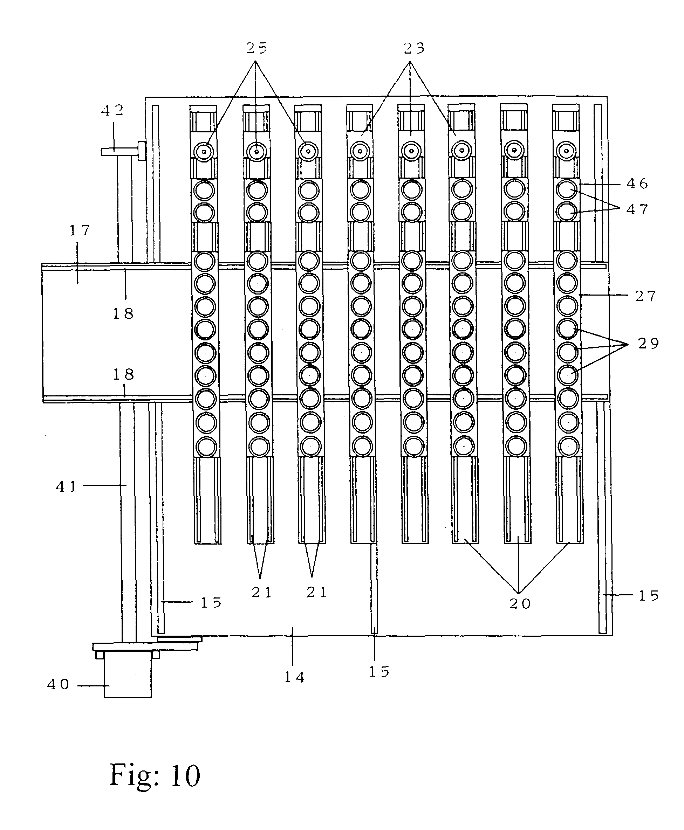

The suction table apparatus of Fig. 10, comprises a base 14, rails 15 mounted on the base 14, and a table 17 mounted on the rails 15. Rails 18 on the table 17 support long support members 20 on which rails 21 are mounted. Rule stopper frames 23 having rule stoppers 25 are mounted on rails 21. Pad frames 27 having suction pads 29 are also mounted on the rails 21. A table moving servomotor 40 is connected to a screw shaft 41 which is supported in a support member 42. The table moving servomotor 40 is connected to the table 17 by connecting member 43 for moving the table 17. These parts are same as the above embodiment, and the explanation of the these parts and the operation thereof can be omitted therefor. In the present embodiment, second pad frames 46 mounting a few suction pads 47, i.e. two suction pads in Fig. 10, are mounted to move on the long support members 20 respectively. In this embodiment, when the edge of the process board 44 is not removed from the suction pads 29, by mounting the second pad frames 46 on the long support members 20 or the rails 21 thereon respectively. The spaces between the suction pads 29 may be the same.

As the first pad frames 27 and the second pad frames 46 can be moved and positioned independently from each other and as the second pad frames 46 can also be moved independently from the rule stopper frames 23, a process board having predetermined formation can held by suction force in an optimum way, and the working efficiency of the apparatus is improved in this second embodiment.

## Claims

1. A suction table apparatus for a numerical control machine characterized by a plurality of long support members (20) mounted to be moved to a width direction of a table (17), rule stopper frames (23) mounted to be moved along the long support members (20) respectively at one end thereof, rule stoppers (25) respectively attached to the rule stopper frames (23) respectively, first pad frames (27) mounted to be moved along the long support members (20) in spaces left by the rule stopper frames (23) respectively, and suction pads (29) respectively attached to each of the first pad frames (27).

2. The suction table apparatus of claim 1, characterized in that the rule stopper frames (23) and the first pad frames (27) are moved and positioned according to the shape of a process board by the rule stopper moving servomotor (32) and the pad moving servomotor (36).

3. The suction table apparatus of claim 1 or 2, characterized in that support moving servomotors (39) are respectively mounted the long support members (20).

4. The suction table apparatus of claim 1, characterized in that the rule stoppers (25) and/or the suction pads (29) are mounted on up and down cylinders (24,28) respectively.

5. The suction table apparatus of claim I, characterized in that the table (17) is movable on top of a base (14) in a longitudinal direction of the table (17).

6. The suction table apparatus of claim 1, characterized in that the long support members (20) and the table (17) are mounted on rails (15,18) on the base (15) and the table (17) respectively.

7. The suction table apparatus of claim 1, characterized in that the rails (15,18) are arranged at right angles to each other.

8. The suction table apparatus of claim 1, characterized in that second pad frames (46) are mounted on the long support members (20), said second pad frames (46) having suction pads (47) respectively attached thereto.

9. The suction table apparatus of claim 1, characterized in that additional pad frames (46) are movable independently from the pad frames (27) and the rule stoppers (25).
